Europäisches Patentamt

European Patent Office

Office européen des brevets

(19)

(11) Numéro de publication : **0 068 559**
**B1**

(12) **FASCICULE DE BREVET EUROPÉEN**

(45) Date de publication du fascicule du brevet :
**12.11.86**

(21) Numéro de dépôt : **82200737.3**

(22) Date de dépôt : **16.06.82**

(51) Int. Cl.⁴ : **F 03 D   3/06**, F 03 B 17/06

(54) Roue destinée à coopérer avec un fluide.

(30) Priorité : 19.06.81 CH 4061/81

(43) Date de publication de la demande :
05.01.83 Bulletin 83/01

(45) Mention de la délivrance du brevet :
12.11.86 Bulletin 86/46

(84) Etats contractants désignés :
DE FR GB NL SE

(56) Documents cités :
WO-A-80 /009 91
DE-A- 2 826 180
FR-E-    87 537
GB-A-   182 774
GB-A- 2 017 230

(73) Titulaire : **Strandgren, Carl Bruno**
**12, chemin de la Plaisante**
**CH-1012 Lausanne (CH)**

(72) Inventeur : **Strandgren, Carl Bruno**
**12, chemin de la Plaisante**
**CH-1012 Lausanne (CH)**

(74) Mandataire : **Ardin, Pierre et al**
**PIERRE ARDIN & CIE 22, rue du Mont-Blanc**
**CH-1211 Genève 1 (CH)**

Jouve, 18, rue St-Denis, 75001 Paris, France

## Description

La présente invention a pour objet une roue à pales articulées entre deux supports suivants des axes de pivotement parallèles à un arbre central de la roue.

On connaît de telles roues, dans lesquelles le mouvement des pales autour de leur axe de pivotement est périodique et la période est la même que celle de révolution autour de l'axe de l'arbre central, la roue comprenant un mécanisme de commande du mouvement des pales réalisé de façon que, dans chaque position angulaire de la roue lors de sa rotation autour de l'arbre central, les plans dressés suivant les axes de pivotement des pales et perpendiculairement aux plans principaux de ces dernières se coupent suivant une même droite qui est située à l'extérieur d'un cylindre engendré par les axes des pales lors de leur rotation autour de l'arbre central et qui est comprise dans le plan passant par l'axe de l'arbre central et orienté perpendiculairement à la direction de déplacement du fluide, le mécanisme comprenant au moins une pièce annulaire d'axe de rotation parallèle à l'arbre central et reliée à l'un des supports de façon à assurer un déplacement angulaire identique à la pièce annulaire autour de son axe de rotation et à la roue autour de l'axe de l'arbre central, et des pièces de guidage en nombre égal aux pales reliées à la pièce annulaire et destinées à coopérer avec des glissières fixées aux pales afin de permettre le réglage de la vitesse de rotation de la roue.

Des roues à pales de ce type sont décrites dans les documents DE-A-2 826 180 et GB-A-2 017 230 et présentent des glissières fixées parallèlement au plan principal des pales.

Dans ces roues, les pièces de guidage sont fixées de manière rigide à la pièce annulaire. Pour le réglage de la vitesse de rotation de la roue, la pièce annulaire est tournée d'un certain angle autour de son centre de rotation et les pièces de guidage effectuent un mouvement circulaire centré sur le centre de rotation de la pièce annulaire.

Il peut être démontré géométriquement qu'un tel réglage par déplacement circulaire des pièces de réglage ne permet d'atteindre que très approximativement une orientation telle que les plans dressés perpendiculairement aux pales se coupent suivant une seule droite qui est située à l'extérieur dudit cylindre et qui est comprise dans le plan passant par l'axe central et orienté perpendiculairement à la direction de déplacement du fluide. De tels écarts faibles dans l'orientation des pales par rapport à l'orientation théorique peuvent entraîner une diminution considérable du rendement.

Un autre inconvénient des roues précitées réside dans le fait qu'un réglage par rotation de la pièce annulaire complète par rapport à la roue nécessite un dispositif de réglage compliqué comportant un grand nombre de pièces, entraînant des pertes de rendement par friction et également un nombre de pannes accru.

L'invention telle qu'elle est caractérisée dans les revendications permet de remédier à ces inconvénients.

Les avantages ainsi obtenus consistent essentiellement en ceci que le réglage des pales est géométriquement exact, permettant un rendement élevé, mais également en ce que le mécanisme de commande est constitué par un petit nombre de composants nécessitant très peu d'entretien et permettant un prix de construction relativement faible.

Selon une variante préférée de l'invention, les déplacements des pièces de réglage des directions tangentielles ou radiales par rapport à la pièce annulaire sont commandés par un régulateur centrifuge.

Le dessin annexé représente schématiquement et à titre d'exemple, une forme d'exécution et deux variantes de la roue, objet de l'invention.

La figure 1a est une vue schématique en plan de la roue.

La figure 1b est une vue en élévation de la roue illustrée dans la figure 1a.

La figure 2 montre, en détail, une partie du mécanisme de commande du mouvement des pales.

Les figures 3 et 4 représentent deux variantes dudit mécanisme de commande.

La figure 5 illustre le principe de fonctionnement d'une roue selon l'invention.

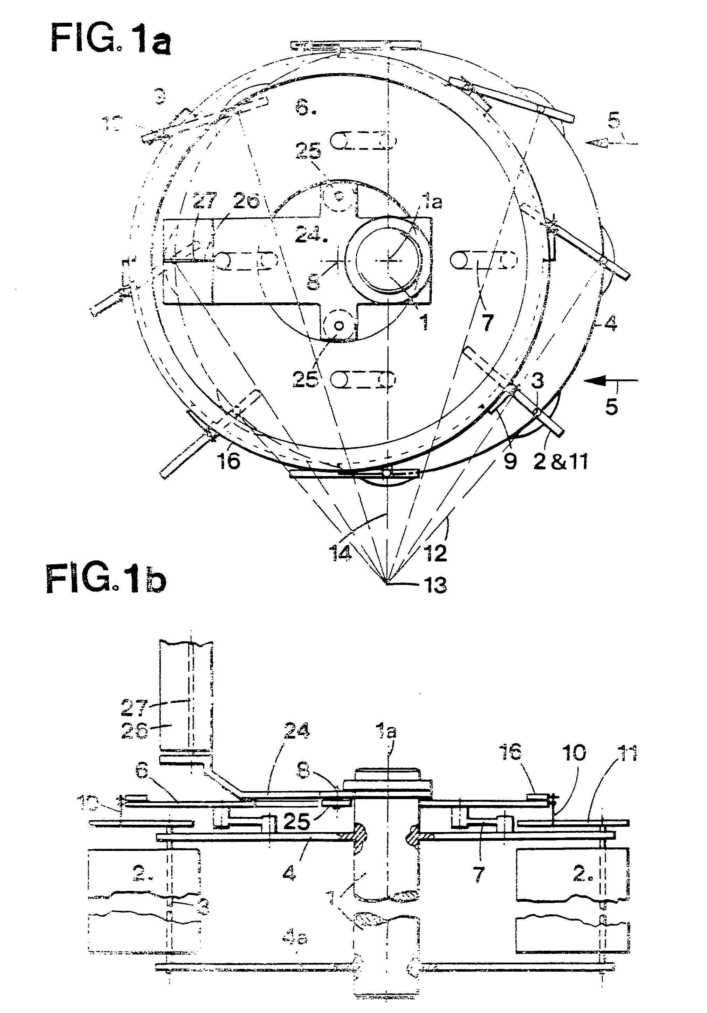

La roue représentée schématiquement aux figures 1a et 1b constitue un moteur éolien et comporte un arbre vertical 1, autour duquel sont agencées des pales 2, portées par des pivots 3 disposés parallèlement à l'arbre vertical 1 et montés tournant entre deux supports de forme générale circulaire 4 et 4a, ayant comme centre de rotation l'axe 1a de l'arbre vertical. La roue comporte en outre un dispositif commandant l'orientation des pales pendant leur rotation autour de l'arbre 1. Ce dispositif comprend une pièce annulaire 6, reliée par quatre bielles 7 à la pièce circulaire 4. Ces bielles assurent un déplacement angulaire identique à la pièce annulaire 6 autour de son centre de rotation 8 et aux pièces circulaires 4 et 4a autour de leur axe 1a, ces deux axes étant parallèles entre eux et distants l'un de l'autre. Cette disposition permet d'orienter le centre 8 dans la direction 5 de déplacement du fluide par rapport à l'arbre vertical 1. Une pièce cruciforme 24 est montée pour tourner librement sur l'arbre 1 et comporte sur ses bras latéraux deux disques 25 tournant sur des axes verticaux. Ces disques s'appuient sur le bord intérieur de la pièce annulaire 6. Le quatrième bras est muni d'un organe en forme de girouette 26 orientable sur un axe 27. Grâce à cet arrangement, le mouvement autour des deux axes de rotation 1a et 8 est très bien stabilisé et le dispositif de commande du mouvement des pales est maintenu constamment dans la position correcte par rapport au déplacement du fluide 5 pour capter son énergie.

La pièce annulaire 6 comporte à sa périphérie des tiges 9 en nombre égal au nombre de pales 2 et orientées tangentiellement à un cercle de diamètre sensiblement égal au cercle trajectoire des axes des pales. Chacune de ces tiges porte une pièce de guidage sous forme d'un téton 10, fixé dans une position déterminée et destiné à coopérer avec une glissière 11 solidaire du pivot 3 de chaque pale, la glissière étant orientée parallèlement au plan principal de la pale. Les tétons correspondant à chacune des pales occupent une position identique sur les tiges 9, réglée au moyen d'une bague 16. Pour toute position donnée de ces tétons sur les tiges, les plans 12 passant par les axes des pales 3 et normaux aux plans principaux des pales 2 se coupent sensiblement suivant une même droite 13 se situant à l'extérieur du cercle trajectoire des axes 3 des pales 2 sur un plan 14 perpendiculaire au plan déterminé par les deux axes de rotation 1a et 8 et passant par l'axe de rotation 1a.

La position des tétons 10 sur les tiges 9, définit de manière précise le mouvement des pales et détermine la position de la droite d'intersection 13 sur le plan 14. Si les tétons sont placés près des points de fixation des tiges, la droite d'intersection 13 se trouve dans une position tendant vers l'infini et les pales sont sensiblement parallèles entre elles. La vitesse de rotation est nulle. Si l'on déplace maintenant simultanément tous les tétons sur les tiges 9 en tournant la bague 16 de façon à augmenter les distances 15, le rayon séparant la droite 13 de l'axe 1a diminue de manière inversement proportionnelle et la vitesse de rotation de la roue augmente graduellement pour une vitesse de déplacement du fluide donnée.

Quand la roue effectue une rotation dans le sens des aiguilles d'une montre autour de l'axe 1a, les pales tournent dans le sens contraire autour des axes 3. Pour un observateur extérieur, les pales paraissent animées d'un mouvement d'oscillation centré sur la droite 13, intersection des plans normaux aux pales.

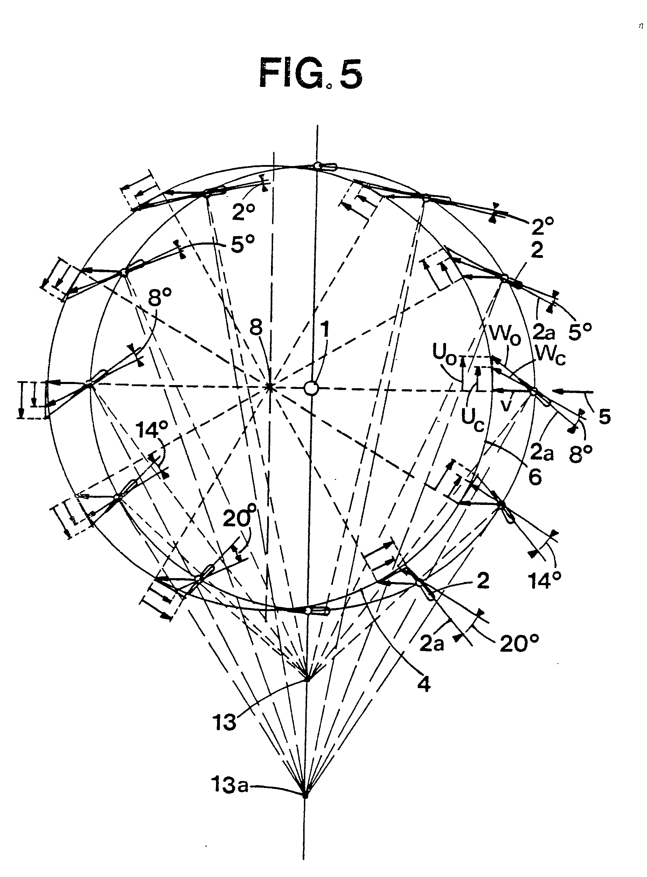

En référence à la figure 5, la roue est entraînée par un fluide en mouvement ayant une vitesse V. Si la roue n'est soumise à aucune charge, la roue est entraînée à une vitesse périphérique $U_o$, qui en combinaison avec la vitesse V donne une vitesse résultante $W_o$ de la roue par rapport au fluide en mouvement. Les pales 2 sont orientées de façon que leur plan principal 2a soit orienté parallèlement au vecteur $W_o$ et que les normales aux pales se croisent en une seule intersection 13.

Si la roue est maintenant soumise à une charge, sa vitesse de rotation diminue et la vitesse périphérique ne correspond qu'à une valeur $U_c$. Le fluide se déplace alors par rapport à la pale en mouvement à une vitesse résultante représentée par le vecteur $W_c$ qui fait avec le plan principal 2a des pales un angle d'incidence variable suivant la position angulaire occupée par la pale. Les normales à ces vitesses résultantes $W_c$ réelles se croisent à un point 13a qui, par définition, est le centre de rotation instantané. Dans l'exemple illustré à la figure 5, la charge est telle que la vitesse périphérique réelle $U_c$ sous charge est diminuée de 27 % par rapport à la vitesse périphérique sans charge et les vecteurs $W_c$ font, de ce fait, avec les plans principaux 2a des pales 2 un angle d'incidence variant de 0 à 20° environ.

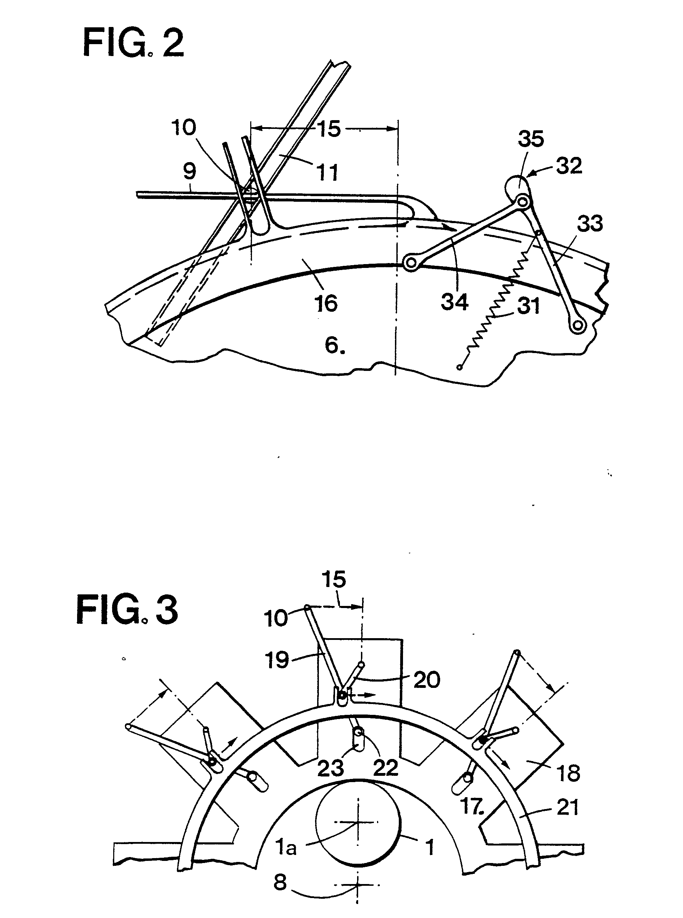

Afin de maintenir constante la vitesse de rotation de la roue indépendamment des variations de la charge et de la vitesse relative du fluide, l'angle d'incidence des pales peut être commandé par un dispositif automatique de réglage agissant sur la bague de réglage 16 qui à son tour permet de déplacer toutes les pièces de guidage 10 sur les tiges 9 en référence à la figure 1 et 2. Ce dispositif peut être réalisé par des moyens variés, mécaniques ou électroniques. Un exemple de réalisation mécanique est représenté à la figure 2, par un régulateur centrifuge 32. Ce dernier comporte un bras 33, fixé par une de ses extrémités à la pièce annulaire 6 et un autre bras 34 monté par une de ses extrémités sur la bague de réglage 16. Une masselotte 35 soumise à la force centrifuge agit contre l'action du ressort 31 et permet de cette manière de corriger des variations de la vitesse de rotation par un ajustement de l'angle d'incidence des pales.

La variante du dispositif de commande des pales représentée à la figure 3 comprend une pièce annulaire 17 munie d'autant de bras 18 à son pourtour que la roue comporte de pales. Le réglage de l'orientation des pales est également produit par des pièces de guidage ou tétons 10 coopérant avec des glissières rigidement reliées aux axes de pivotement des pales, mais le déplacement des tétons suivant une direction sensiblement tangentielle est effectué par un dispositif comprenant une tige coulissante 19, une biellette 20 et une bague de réglage 21. Chacun des tétons 10 est fixé sensiblement à une extrémité de la tige 19, l'autre extrémité de cette dernière portant un doigt 22 susceptible de coulisser en direction radiale dans une coulisse 23, prévue sur la pièce annulaire 17. La tige 19 est en outre reliée à la pièce annulaire par la biellette 20 montée de manière pivotante par une de ses extrémités sur un des bras 18 de la pièce annulaire 17 et par l'autre extrémité sur la tige 19. Cette biellette est destinée à guider le mouvement de la tige de façon que, lorsque cette dernière se déplace, ledit téton 10 effectue un déplacement suivant une direction sensiblement tangentielle à un cercle de diamètre sensiblement égal au cercle trajectoire des axes des pales. La bague de réglage 21 peut être commandée par un régulateur centrifuge 32 analogue à celui décrit en référence à la figure 2.

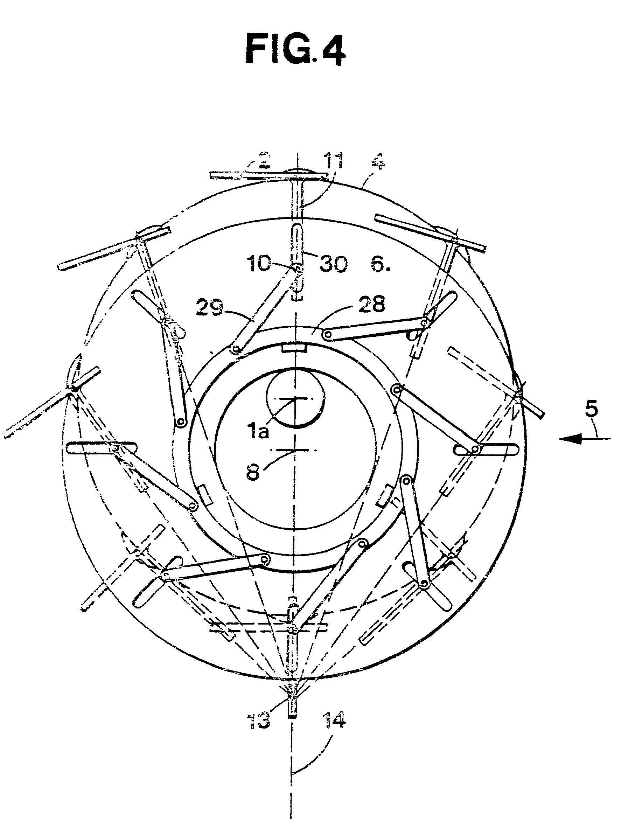

Une autre variante du dispositif de commande des pales illustrée à la figure 4, se distingue du fait que les glissières 11 et les pales 2 correspondantes font entre elles un angle de 90°. Dans ce cas, le plan passant par les axes de rotation 1a et 8 de l'arbre vertical, respectivement de la pièce annulaire 6, ne doit plus être orienté parallèlement à la direction de déplacement du fluide, comme dans la forme d'exécution selon la figure 1, mais perpendiculairement à cette direction. Le réglage de la position de la droite d'intersection 13 sur le plan 14 s'effectue en déplaçant simultanément et de manière identique toutes les pièces de guidage ou tétons 10, coopérant avec les glissières 11, dans une direction radiale, par rapport au centre de rotation 8 de la pièce annulaire 6.

Un tel réglage peut être réalisé au moyen d'une bague 28, sur laquelle des tiges 29 sont montées de manière pivotante par une de leurs extrémités, l'autre extrémité de ces tiges étant fixée aux tétons 10. Ces derniers traversent la pièce annulaire par des fentes radiales 30 pour coopérer avec les glissières 11 orientées perpendiculairement aux pales 2.

La bague 28 peut, comme précédemment, être commandée par un régulateur centrifuge, non représenté à la figure 4.

**Revendications**

1. Roue à pales coopérant avec un fluide et articulées entre deux supports (4) suivant des axes de pivotement (3) parallèles à un arbre central (1) de la roue, le mouvement des pales (2) autour de leur axe de pivotement (3) étant périodique et la période étant la même que celle de révolution autour de l'axe de l'arbre central (1), la roue comprenant un mécanisme de commande du mouvement des pales (2) réalisé de façon que, dans chaque position angulaire de la roue lors de sa rotation autour de l'arbre central (1), les plans (12) dressés suivant les axes de pivotement (3) des pales (2) et perpendiculairement aux plans principaux de ces dernières se coupent suivant une même droite (13) qui est située à l'extérieur d'un cylindre engendré par les axes (3) des pales (2) lors de leur rotation autour de l'arbre central (1) et qui est comprise dans le plan passant par l'axe de l'arbre central (1) et orienté perpendiculairement à la direction de déplacement (5) du fluide, le mécanisme comprenant au moins une pièce annulaire (6) d'axe de rotation (8) parallèle à l'arbre central (1) et reliée à l'un des supports (4) de façon à assurer un déplacement angulaire identique à la pièce annulaire (6) autour de son axe de rotation (8) et à la roue autour de l'axe de l'arbre central (1), et des pièces de guidage (10) en nombre égal aux pales (2) reliées à la pièce annulaire et destinées à coopérer avec des glissières (11) fixées aux pales (2) parallèlement à leur plan principal afin de permettre le réglage de la vitesse de rotation de la roue, caractérisée en ce que lesdites pièces de guidage (10) sont mobiles par rapport à la pièce annulaire (6) et reliées à cette dernière par un dispositif de réglage (9, 16 ; 19-23) agencé de façon à déplacer simultanément chacune des pièces de guidage (10) suivant une direction tangentielle à un cercle concentrique de la pièce annulaire (6) et d'un diamètre égal au cercle trajectoire des axes (3) des pales (2).

2. Roue selon la revendication 1, caractérisée en ce que le dispositif de réglage comprend des tiges (9), en nombre égal aux pales (2), fixées rigidement à la pièce annulaire (6) suivant une direction tangentielle à un cercle concentrique de la pièce annulaire (6) et d'un diamètre égal au cercle trajectoire des axes (3) des pales (2), les pièces de guidage (10) étant montées de façon coulissante sur les tiges (9) et déplacées simultanément et bloquées dans une position donnée au moyen d'une bague de réglage (16).

3. Roue selon la revendication 1, caractérisée en ce que chacune des pièces de guidage (10) est fixée sensiblement à une extrémité d'une tige (19), l'autre extrémité portant un doigt (22) susceptible de coulisser en direction radiale dans une coulisse (23) prévue sur la pièce annulaire (6), la tige (19) étant, en outre, reliée à la pièce annulaire (6) par une biellette (20) montée de manière pivotante par une de ses extrémités sur la pièce annulaire (6) et par l'autre extrémité sur le bras (19), la biellette (20) étant destinée à guider le mouvement de la tige (19) de façon que, lorsque cette dernière se déplace, la pièce de guidage (10) effectue un déplacement suivant une direction tangentielle à un cercle de diamètre égal au cercle trajectoire (4) des axes (3) des pales (2), les tiges (19) étant déplacées simultanément et bloquées dans une position donnée au moyen d'une bague de réglage (21).

4. Roue à pales coopérant avec un fluide et articulées entre deux supports (4) suivant des axes de pivotement (3) parallèles à un arbre central (1) de la roue, le mouvement des pales (2) autour de leur axe de pivotement (3) étant périodique et la période étant la même que celle de révolution autour de l'axe de l'arbre central (1), la roue comprenant un mécanisme de commande du mouvement des pales (2) réalisé de façon que, dans chaque position angulaire de la roue lors de sa rotation autour de l'arbre central (1), les plans (12) dressés suivant les axes de pivotement (3) des pales (2) et perpendiculairement aux plans principaux de ces dernières se coupent suivant une même droite (13) qui est située à l'extérieur d'un cylindre engendré par les axes (3) des pales (2) lors de leur rotation autour de l'arbre central (1) et qui est comprise dans le plan passant par l'axe de l'arbre central (1) et orienté perpendiculairement à la direction de déplacement (5) du fluide, le mécanisme comprenant au moins une pièce annulaire (6) d'axe de rotation (8) parallèle à l'arbre central (1) et reliée à l'un des supports (4) de façon à assurer un déplacement angulaire identique à la pièce annulaire (6) autour de son axe de rotation (8) et à la roue autour de l'axe de l'arbre central (1), et des pièces de guidage (10) en nombre égal aux pales (2) reliées à la pièce annulaire et destinées à coopérer avec des glissières (11) fixées aux pales (2) afin de permettre le réglage de la vitesse de rotation de la roue, caractérisée en ce que lesdites pièces de guidage (10) sont mobiles par rapport à la pièce annulaire (6) et reliées à cette dernière par un dispositif de réglage agencé de façon à déplacer chacune des pièces de guidage (10) suivant une direction radiale par rapport à la pièce annulaire (6), les glissières (11) étant fixées perpendiculairement au plan principal des pales (2).

5. Roue selon la revendication 4, caractérisée en ce que le dispositif de réglage comporte des bras de réglage (29), en nombre égal aux pales (2), portant à une de leurs extrémités les pièces de guidage (10) agencées de façon à coulisser dans des fentes radiales (30) prévues dans la pièce annulaire (6) pour coopérer avec des glissières (11), l'autre extrémité des bras de réglage étant fixée de manière pivotante à une bague de réglage (28) concentrique de la pièce annulaire (6).

6. Roue selon l'une des revendications 2, 3 ou 5, caractérisée en ce que le dispositif de réglage comprend un régulateur centrifuge (32) commandant le déplacement relatif de la bague de réglage (16, 21, 28) par rapport à la pièce annulaire (6).

**Claims**

1. Wheel with blades working with a fluid and articulated between two supports (4) along pivoting axes (3) parallel to a central shaft (1) of the wheel, the movement of the blades (2) around their pivoting axis (3) being periodic and the period being the same as that of a revolution around the axis of the central shaft (1), the wheel comprising a mechanism for controlling the movement of the blades (2) realized in a manner that, in each angular position of the wheel during its rotation around the central shaft (1), the planes (12) alined along the pivoting axes (3) of the blades (2) and perpendicular to the main planes of the latter intersect along a single straight line (13) which is located on the outside of a cylinder generated by the axes (3) of the blades (2) during their rotation around the central shaft (1) and which is included in the plane passing through the axis of the central shaft (1) and oriented perpendicularly to the direction of movement (5) of the fluid, the mechanism comprising at least one annular part (6) with an axis of rotation (8) parallel to the central shaft (1) and connected to one of the supports (4) so as to assure an identical angular displacement to the annular part (6) around its axis of rotation (8) and to the wheel around the axis of the central shaft (1), and guiding pieces (10) in a number equal to the blades (2) connected to the annular part and intended to work with slides (11) fastened to the blades (2) parallel to the main plane in order to permit ajustment of the speed of rotation of the wheel, characterized in that said guiding pieces (10) are movable in relation to the annular part (6) and connected to the latter by an adjustment device (9, 16 ; 19-23) arranged so as to move simultaneously each of the guiding pieces (10) in a direction tangential to a circle concentric with the annular part (6) and with a diameter equal to the trajectory circle of the axes (3) of the blades (2).

2. Wheel according to claim 1, characterized in that the adjustment device comprises rods (9), equal in number to the blades (2), rigidly attached to the annular part (6) in a direction tangential to a circle concentric with the annular part (6) and with a diameter equal to the trajectory circle of the axes (3) of the blades (2), the guiding pieces (10) being mounted in order to slide on the rods (9) and moved simultaneously and locked in a given position by an adjustment ring (16).

3. Wheel according to claim 1, characterized in that each of the guiding pieces (10) is attached approximately at one end of a bar (19), the other end carrying a pin (22) slidable in a radial direction in a slot (23) provided on the annular part (6), the bar (19) being further connected to the annular part (6) by a link rod (20) mounted to pivot by one of its ends on the annular part (6) and by the other end on the bar (19), the link rod (20) being intended to guide the movement of the bar (19) so that, when the latter is moved, the guiding piece (10) makes a movement in a direction tangential to a circle with a diameter equal to the trajectory circle (4) of the axes (3) of the blades (2), the bars (19) being moved simultaneously and locked in a given position by an adjustment ring (21).

4. Wheel with blades working with a fluid and articulated between two supports (4) along pivoting axes (3) parallel to a central shaft (1) of the wheel, the movement of the blades (2) around their pivoting axis (3) being periodic and the period being the same as that of a revolution around the axis of the central shaft (1), the wheel comprising a mechanism for controlling the movement of the blades (2) realized in a manner that, in each angular position of the wheel during its rotation around the central shaft (1), the planes (12) alined along the pivoting axes (3) of the blades (2) and perpendicular to the main planes of the latter intersect along a single straight line (13) which is located on the outside of a cylinder generated by the axes (3) of the blades (2) during their rotation around the central shaft (1) and which is included in the plane passing through the axis of the central shaft (1) and oriented perpendicularly to the direction of movement (5) of the fluid, the mecanism comprising at least one annular part (6) with an axis of rotation (8) parallel to the central shaft (1) and connected to one of the supports (4) so as to assure an identical angular displacement to the annular part (6) around its axis of rotation (8) and to the wheel around the axis of the central shaft (1), and guiding pieces (10) in a number equal to the blades (2) connected to the annular part and intended to work with slides (11) fastened to the blades (2) in order to permit adjustment of the speed of rotation of the wheel, characterized in that said guiding pieces (10) are movable in relation to the annular part (6) and connected to the latter by an adjustment device arranged so as to move each of the guiding pieces (10) in a radial direction with respect to the annular part (6), the slides (11) being fastened perpendicular to the main plane of the blades (2).

5. Wheel according to claim 4, characterized in that the adjustment device includes adjustment arms (29), equal in number to the blades (2), carrying at one of their ends the guiding pieces (10), which are arranged to slide in radial slots (30) provided in the annular part (6) in order to work with the slides (11), the other end of the adjustment arms being pivotally attached to an adjustment ring (28) concentric to the annular part (6).

6. Wheel according to one of the claims 2, 3 or 5, characterized in that the adjustment device includes a centrifugal governor (32) controlling the relative movement of the adjustment ring (16, 21, 28) in relation to the annular part (6).

**Patentansprüche**

1. Rad mit Schaufeln, die mit einem Fluid zusammenarbeiten und mittels zu einer Zentralwelle (1) des Rades parallelen Schwenkachsen (3) zwischen zwei Stützen (4) gelenkig angeordnet sind, wobei die Bewegung der Schaufeln (2) um ihre Schwenkachse (3) periodisch ist, und wobei die Periode gleich der Umdrehungsperiode um die Achse der Zentralwelle (1) ist, wobei das Rad einen Steuerungsmechanismus für die Bewegung der Schaufeln (2) aufweist, der derart gestaltet ist, dass in jeder Winkelstellung des Rades bei seiner Umdrehung um die Zentralwelle (1), die zu den Hauptebenen (12) der Schaufeln (2) senkrechten und die Schaufelschwenkachsen (3) enthaltenden Ebenen sich in einer einzigen Geraden (13) schneiden, welche sich ausserhalb eines Zylinders befindet, der durch die Schwenkachsen (3) der Schaufeln (2) bei ihrer Umdrehung um die Zentralwelle (1) gebildet wird, und welche in einer Ebene liegt, die die Achse der Zentralwelle (1) enthält und senkrecht zur Bewegungsrichtung (5) des Fluids steht, wobei der Mechanismus zumindest ein Ringstück (6) aufweist, dessen Umdrehungsachse (8) parallel zur Zentralwelle (1) liegt und die derart mit einer der Stützen (4) verbunden ist, dass die Drehbewegung des Ringstückes (6) um seine Umdrehungsachse (8) gleich der Drehbewegung des Rades um die Zentralwelle (1) ist, und Führungsstücke (10) in derselben Anzahl wie die Schaufeln (2), die mit dem Ringstück verbunden sind und dazu vorgesehen sind, mit Führungsschienen (11) zusammenzuarbeiten, welche an den Schaufeln (2) parallel zu deren Hauptebene befestigt sind, um die Einstellung der Geschwindigkeit des Rades zu ermöglichen, dadurch gekennzeichnet, dass die benannten Führungsstücke (10) gegenüber dem Ringstück (6) beweglich sind und mit diesem über eine Einstellvorrichtung (9, 16, 19-23) derart verbunden sind, dass sie gleichzeitig jedes Führungsstück (10) in einer Richtung bewegen, die tangential zu einem zum Ringstück (6) konzentrischen Kreis liegt, dessen Durchmesser gleich der Kreisbahn der Schaufelachsen (3) ist.

2. Rad gemäss Anspruch 1, dadurch gekennzeichnet, dass die Einstellvorrichtung Stäbe (9) aufweist, deren Anzahl gleich der der Schaufeln (2) ist, und die am Ringstück (6) starr derart angebracht sind, dass sie tangential zu einem zum Ringstück (6) konzentrischen Kreis liegen, dessen Durchmesser gleich der Kreisbahn der Schaufelachsen (3) ist, und wobei die Führungsstücke (10) auf den Stäben (9) gleitend angeordnet sind und gleichzeitig mittels eines Einstellringes (16) bewegt und in gegebenen Lagen verriegelt werden.

3. Rad gemäss Anspruch 1 dadurch gekennzeichnet, dass jedes der Führungsstücke (10) an einem Ende eines Gestänges (19) befestigt ist, wobei das andere Ende einen Zapfen (22) trägt, der radial gleitend in einer auf dem Ringstück (6) angebrachten Gleitführung angeordnet ist, und wobei des Gestänge (19) mit dem Ringstück (6) ebenfalls über einen Schwingarm (20) verbunden ist, welcher an einem seiner Enden am Ringstück (6) und am anderen Ende am Gestänge (19) drehbar angebracht ist, wobei der Schwingarm (20) dazu dient, die Bewegung des Gestänges (19) derart zu führen, dass, wenn das letztere sich bewegt, das Führungsstück (10) sich in einer Richtung bewegt, die tangential zu einem Kreis liegt, dessen Durchmesser gleich der Kreisbahn (4) der Schaufelachsen (3) ist, und wobei die Gestänge (19) gleichzeitig mittels eines Einstellringes (21) bewegt und in gegebenen Lagen verriegelt werden.

4. Rad mit Schaufeln, die mit einem Fluid zusammenarbeiten und mittels zu einer Zentralwelle (1) des Rades parallelen Schwenkachsen (3) zwischen zwei Stützen (4) gelenkig angeordnet sind, wobei die Bewegung der Schaufeln (2) um ihre Schwenkachse (3) periodisch ist, und wobei die Periode gleich der Umdrehungsperiode um die Achse der Zentralwelle (1) ist, wobei das Rad einen Steuerungsmechanismus für die Bewegung der Schaufeln (2) aufweist, der derart gestaltet ist, dass in jeder Winkelstellung des Rades bei seiner Umdrehung um die Zentralwelle (1), die zu den Hauptebenen der Schaufeln (2) senkrechten und die Schaufelschwenkachsen (3) enthaltenden Ebenen sich in einer einzigen Geraden (13) schneiden, welche sich ausserhalb eines Zylinders befindet, der durch die Schwenkachsen (3) der Schaufeln (2) bei ihrer Umdrehung um die Zentralwelle (1) gebildet wird, und welche in einer Ebene liegt, die die Achse der Zentralwelle (1) enthält und senkrecht zur Bewegungsrichtung (5) des Fluids steht, wobei der Mechanismus zumindest ein Ringstück (6) aufweist, dessen Umdrehungsachse (8) parallel zur Zentralwelle (1) liegt und die derart mit einer der Stützen (4) verbunden ist, dass die Drehbewegung des Ringstückes (6) um seine Umdrehungsachse (8) gleich der Drehbewegung des Rades um die Zentralwelle (1) ist, und Führungsstücke (10) in derselben Anzahl wie die Schaufeln (2), die mit dem Ringstück verbunden sind und dazu vorgesehen sind, mit Führungsschienen (11) zusammenzuarbeiten, welche an den Schaufeln (2) befestigt sind, um die Einstellung der Geschwindigkeit des rades zu ermöglichen, dadurch gekennzeichnet, dass die benannten Führungsstücke (10) gegenüber dem Ringstück (6) beweglich sind und mit diesem über eine Einstellvorrichtung derart verbunden sind, dass diese jedes der Führungsstücke (10) in einer zum Ringstück (6) radialen Richtung bewegt, wobei die Führungsschienen (11) senkrecht zur Hauptebene der Schaufeln (2) befestigt sind.

5. Rad gemäss Anspruch 4 dadurch gekennzeichnet, dass die Einstellvorrichtung Stellarme (29) aufweist, deren Anzahl gleich der der Schaufeln (2) ist, und die an einer ihrer Enden die Führungsstücke (10) tragen, welche gleitend in Radialöffnungen (30) des Ringstückes (6) derart angeordnet sind, dass sie mit den Führungsschienen (11) zusammenarbeiten, wobei das andere Ende der Stellarme drehbar an einem zum Ringstück (6) konzentrischen Einstellring (28) befestigt ist.

6. Rad gemäss einem der Ansprüche 2, 3 oder 5, dadurch gekennzeichnet, dass die Einstellvorrichtung einen Zentrifugalregulator (32) aufweist, der die relative Bewegung des Einstellringes (16, 21, 28) gegenüber dem Ringstück (6) steuert.

# FIG. 1a

# FIG. 1b

# FIG. 2

# FIG. 3

# FIG.4

FIG.5